# EUROPÄISCHE PATENTSCHRIFT

(11) **EP 2 728 202 B1**
(45) Veröffentlichungstag und Bekanntmachung des Hinweises auf die Patenterteilung: **23.10.2019**
(21) Anmeldenummer: 13004695.6
(22) Anmeldetag: 27.09.2013
(51) Int. Cl.: F15B 5/00, G05D 7/00, G05D 7/06, G05B 19/44

(54) **Pneumatisches Antriebssystem und Verfahren zum Betreiben des pneumatischen Antriebssystems**
Pneumatic drive system and method for operating a pneumatic drive system
Système d'entraînement pneumatique et procédé de fonctionnement du système d'entraînement pneumatique

(30) Priorität: 31.10.2012 DE 102012021388
(43) Veröffentlichungstag der Anmeldung: 07.05.2014
(73) Patentinhaber: Samson Aktiengesellschaft, 60314 Frankfurt (DE)
(72) Erfinder: Valentin-Rumpel, Frank, 64823 Groß-Umstadt (DE)
(74) Vertreter: Schmid, Nils T.F.

(56) Entgegenhaltungen:
- DE-A1-102010 035 747
- US-A- 4 763 560
- US-A- 5 878 765

## Beschreibung

Die Erfindung betrifft ein pneumatisches Antriebssystem und ein Verfahren zum Betreiben eines pneumatischen Antriebssystems. Das pneumatische Antriebssystem dient dazu, ein Stellventil, insbesondere ein Regelungsventil oder ein Sicherheitsventil (Emergency Shut Down (ESD-Ventil), einer prozesstechnischen Anlage, wie einer petrochemischen Anlage oder dergleichen, zu betätigen. Das pneumatische Antriebssystem der gattungsgemäßen Art hat eine pneumatische Arbeitskammer und eine mit der Arbeitskammer gekoppelte Strom-Druckwandlung zum Beaufschlagen der Arbeitskammer mit einem Pneumatikdruck, durch den das Stellventil verfahren wird. Die Strom-Druckwandlung hat wenigstens einen elektrischen Eingang zum Empfangen eines elektrischen Stellsignals.

In vielen Anwendungsgebieten des pneumatischen Antriebssystems der gattungsgemäßen Art kommt es darauf an, dass eine gewünschte Stellung für das Stellventil anhand einer Soll-IstWert-Regelung schnell und zuverlässig erreicht wird. Aufgrund der Kraftübertragung mittels Pneumatik neigt das Antriebssystem dazu, die Sollstellung zu überschwingen und die gewünschte Position erst nach einer Verzugszeit zu erreichen.

Beispielsweise im Falle des Einsatzes des pneumatischen Antriebsystems bei einem Pumpgrenzregelventil zum Schutz eines Kompressors kommt es darauf an, dass die gewünschte Ventilstellung schnell erreicht wird, wobei eine präzise Stellungsregelung gewährleistet sein soll. Um den ungewünschten Betriebszustand des "Pumpens" des Kompressors zu vermeiden, soll das Pumpgrenzventil schnell geöffnet werden, so dass die Leistung des Kompressors am Ausgang abgenommen werden kann. Ein Überschwingen des Pumpgrenzventils ist zu vermeiden, um gefährliche Betriebszustände des Kompressors zu unterbinden.

Bei Stellungsregelungen für Stellventile, die keinem frequenten Betrieb unterworfen sind, kann es dazu kommen, dass das Ventilglied an der Dichtfläche des Ventilsitzes haften bleibt. Dabei muss von dem pneumatischen Antriebsystem eine größere Kraft aufgewendet werden, um das Ventilglied an dem Ventilsitz zu lösen. Die dabei auftretende Verzugszeit problematisiert eine schnelle und exakte Regelung. Ist das Stellventil dazu eingesetzt, ein Prozessmedium der prozesstechnischen Anlage zu regeln, neigt das Stellventil aufgrund von Anregung durch das Prozessmedium zu Schwingungen. Diese Schwingungen machen eine exakte Regelung des Prozessmediums schwierig.

US 5,878,765 A betrifft einen durch einen Mikroprozessor gesteuerten Positionsregler.

DE 10 2010 035 747 A1 offenbart eine Ventileinheit mit parallel geschalteten 3/3-Wege-Proportionalventileinheiten.

US 4,763,560 A betrifft ein Verfahren und eine Vorrichtung zum Steuern und Positionieren eines Fluidaktuators.

Es ist Aufgabe der Erfindung, die Nachteile des Stands der Technik zu überwinden, insbesondere ein pneumatisches Antriebssystem zum Betätigen eines Stellventils und ein Verfahren zum Betreiben des pneumatischen Antriebssystems bereitzustellen, mit dem eine schnelle und exakte Stellungsregelung erreicht werden kann.

Diese Aufgabe wird durch die Merkmale von Anspruch 1 bzw. 8 gelöst.

Danach ist ein pneumatisches Antriebssystem zum Betätigen eines Stellventils, insbesondere eines Regelungs-Stellventils oder eines Sicherheitsventils einer prozesstechnischen Anlage vorgesehen. Das pneumatische Antriebssystem kann beispielsweise der Typ eines einfach wirkenden pneumatischen Antriebs sein, bei dem innerhalb eines Antriebsgehäuses eine pneumatische Antriebskammer und eine mit Federn beaufschlagte Rückstellkammer ausgebildet sein kann. Die beiden Kammern können durch eine Membran voneinander getrennt sein. Als weiterer Antriebstyp kann auch ein doppelt wirkender Pneumatikantrieb vorgesehen sein, der vor allem mit Pneumatikdruck zu beaufschlagende Arbeitskammern aufweist, welche durch eine bewegliche Stellkordel voneinander pneumatisch getrennt sind. Bei dem doppelt wirkenden Pneumatikantrieb wird im Folgenden eine der Kammern erfindungsgemäß angesehen. Es können auch beide mit der erfindungsgemäßen Maßnahme beaufschlagt sein. Mit der pneumatischen Arbeitskammer ist eine Strom-Druckwandlung gekoppelt, die die Arbeitskammer mit dem Pneumatikdruck beaufschlagt, durch den das Stellventil verfahren wird. Der Strom-Druckwandler hat wenigstens einen elektrischen Eingang zum Empfangen des elektrischen Stellsignals. Erfindungsgemäß ist die Strom-Druckwandlung derart ausgelegt, dass wenigstens zwei pneumatische Stellsignale oder Stelldrucksignale erzeugt werden, mit denen die Arbeitskammer beaufschlagt ist. Je nach Betriebszustand kann die Strom-Druckwandlung, insbesondere deren Elektronik, einen Aktivierungs- und Deaktivierungsmechanismus aufweisen, der das jeweilige pneumatische Stellsignal oder Stelldrucksignal der wenigstens zwei pneumatischen Stellsignale oder Stelldrucksignale aktiviert und deaktiviert. Die pneumatischen Stelldrucksignale sind unabhängig voneinander und können der Arbeitskammer dem Druckbetrage nach sowie dem Zuführzeitpunkt unterschiedlich an die pneumatische Arbeitskammer des pneumatischen Antriebssystems zugeführt werden.

Bei einer Weiterbildung der Erfindung erzeugt die Strom-Druckwandlung die wenigstens zwei Stelldrucksignale unabhängig voneinander, insbesondere auf der Basis von zwei unterschiedlichen Stellsignalen. Das elektrische Stellsignal kann von einem Stellungsregler oder einer Elektrokomponente eines Stellungsreglers generiert sein, der auf der Basis eines Soll-/Ist-Wertvergleichs das elektrische Stellsignal abgibt, auf deren Basis das jeweilige pneumatische Stellsignal erzeugt wird. Der Ist-Stellungswert und der Soll-Stellungswert werden dem Stellungsregler zugeführt.

Bei einer Weiterbildung der Erfindung führt die Strom-Druckwandlung die wenigstens zwei pneumatischen Stellsignale unabhängig voneinander der Arbeitskammer zu. Die wenigstens zwei Stellsignale können sprungartig oder allmählich zu dem maximalen Stelldrucksignal der pneumatischen Arbeitskammer zugeführt werden.

Bei einer Weiterbildung der Erfindung führt die Strom-Druckwandlung die wenigstens zwei pneumatischen Stellsignale gemäß einer vorgegebenen oder insbesondere durch einen Stellungsregler geregelten, zeitlichen Taktung zu. Dabei können die wenigstens zwei pneumatischen Stelldrucksignale gleichzeitig oder nacheinander aufsummierend oder nacheinander abwechselnd der Arbeitskammer zugeführt werden.

Bei einer Weiterbildung der Erfindung ist der insbesondere maximale Druckbetrag der wenigstens zwei Stelldrucksignale voreingestellt. Dies kann beispielsweise dadurch erreicht werden, dass für die Stromdruck-Wandlung eines Stelldrucksignals ein I/p-Druckwandlerbaustein herangezogen wird, der lediglich ein festgelegtes Stelldrucksignal aufgeben kann, wenn ein auslösendes elektrisches Stellsignal empfangen wird.

Vorzugsweise sind Luftdurchflüsse der wenigstens zwei Stellsignale voreingestellt. Dies kann bedeuten, dass die Strom-Druckwandlung das Auslösen und Nicht-Auslösen der Stellsignale veranlasst, die, wenn ausgelöst, einen vorbestimmten Luftdurchfluss hin zur Arbeitskammer veranlassen. Der Luftdurchfluss kann als Volumenstrom oder Massenstrom angesehen werden. Von den wenigstens zwei Stellsignalen der Strom-Druckwandlung kann insbesondere eines einen geringen Luftdurchfluss und ein anderes einen großen Luftdurchfluss aufweisen, wobei insbesondere der große Durchfluss wenigstens doppelt so groß wie der geringe Luftdurchfluss ist. Vorzugsweise kann die Strom-Druckwandlung derart gesteuert und/oder geregelt sein, dass für eine Schnellverlagerung des Stellventils zuerst das Stellsignal mit großem Luftdurchfluss oder beide Stellsignale mit großem und niedrigem Luftdurchfluss gleichzeitig zugeführt werden. Erst in einem zweiten Steuerungs- und/oder Regelungsschritt wird anschließend lediglich das Stellsignal mit geringem Luftdurchfluss der Arbeitskammer betriebsgemäß zugeführt.

Bei einer bevorzugten Ausführung der Erfindung ist eines der wenigstens zwei Stelldrucksignale ein Niederdrucksignal und das andere ein Hochdruckstellsignal. Das Hochdruckstellsignal dient dazu, eine große Stellamplitude möglichst schnell zu überwinden, während das Niederdruckstellsignal dazu dienen kann, eine Feineinstellung einer Stellungsregelungsvorgabe zu realisieren. Vorzugsweise ist das Hochdruckstellsignal wenigstens doppelt so groß wie das Niederdruckstellsignal. Die Strom-Druckwandlung kann derart geregelt sein, dass für eine Schnellverlagerung des Stellventils zuerst zumindest das Hochdruckstellsignal und anschließend, insbesondere ausschließlich, das Niederdruckstellsignal der Arbeitskammer zugeführt wird.

Bei einer Weiterbildung der Erfindung umfasst die Strom-Druckwandlung eine Regelungselektronik, wie einen Mikrorechner. Die Regelungselektronik regelt anhand eines empfangenen Sollstellwerts, der beispielsweise von einer Leitwarte dem pneumatischen Antriebssystem zugeführt werden kann, und gegebenenfalls eines Ist-Stellwert, der von einem Positionssensor empfangen ist, der insbesondere Teil des pneumatischen Antriebssystems sein kann, die Erzeugung und/oder Zuführung der wenigstens zwei Stelldrucksignale. Dabei kann die Regelungselektronik mit wenigstens zwei I/p-Wandlern der Strom-Druckwandlung regelungsgemäß gekoppelt sein. Die wenigstens zwei I/p-Wandler können unabhängig voneinander arbeiten, das jeweilige pneumatische Stellsignal der wenigstens zwei Stellsignale insbesondere nach Empfang eines vor den jeweiligen I/p-Wandler spezifizierten elektrischen Stellsignals der Regelungselektronik erzeugen. Dabei können die wenigstens zwei I/p-Wandler an eine einzige Druckluftquelle vorzugsweise konstanten Versorgungsdrucks von insbesondere 6 bar angeschlossen sein.

Vorzugsweise hat die Regelungselektronik einen Taktgeber oder einen Aktivierungs- und Deaktivierungsmechanismus, der steuerungsgemäß auf den jeweiligen I/p-Wandler zugreift. Der Taktgeber kann die Beaufschlagung der Arbeitskammer mit den wenigstens zwei pneumatischen Stellsignalen derart zeitlich takten, dass die Stelldrucksignale gleichzeitig oder sukzessive sich überlagernd oder sich ausschließend in einen regelungsgemäßen Zeitabschnitt der Arbeitskammer zugeführt werden. Die Stelldrucksignale können ihrem Druckbetrag nach fest voreingestellt sein, wobei die Zeitabfolge einen Regelungsparameter der Regelungselektronik darstellen kann.

Bei einer Weiterbildung der Erfindung umfasst die Strom-Druckwandlung eine Gruppe bestehend aus zwei wenigstens modularen Elektronikkomponenten unterschiedlicher Funktionalität und wenigstens einem modularen Steckplatz zur Belegung mit jeweils einer Elektronickomponente. Vorzugsweise ist wenigstens eine Elektronikkomponente ein I/p-Wandler. Dabei sind die wenigstens zwei Elektronikkomponenten der Gruppe und der wenigstens eine Steckplatz derart modular aufeinander abgestimmt, dass deren elektrische und gegebenenfalls pneumatische Schnittstelle bei Belegung des Steckplatzes jeweils funktions- und betriebssicher einander übergehen. An der belegten Position im Steckplatz liegen sich die Schnittstellen der eingesetzten Elektronikkomponente sowie die Schnittstelle des Steckplatzes diametral gegenüber, so dass ein elektrischer Kontakt und gegebenenfalls eine pneumatische, druckverlustlose Kopplung hergestellt sind. Dabei kann die Strom-Druckwandlung auch Elektronickomponenten aufweisen, die nicht in einem modularen Steckplatz angeordnet sind. Ein modularer Steckplatz dient zur Aufnahme einer singulären modularen Elektronikkomponente.

Bei einer bevorzugten Ausführung der Erfindung hat der wenigstens eine modulare Steckplatz jeweils einen modularen Andockmechanismus für die wenigstens eine modulare Elektronickomponente. Der Andockmechanismus ist dazu ausgelegt, die jeweilige Elektronikkomponente in dem modularen Steckplatz insbesondere mittels einer Einrastung fest aufzunehmen und zu halten sowie gegebenenfalls für einen Austausch der Elektronikkomponenten insbesondere zerstörungsfrei und vorzugsweise manuell, insbesondere ohne Spezialwerkzeug, zu lösen.

Vorzugsweise umfasst die Strom-Druckwandlung wenigstens zwei modulare Steckplätze, die mit wenigstens zwei I/p-Wandlern belegt sind. Des Weiteren kann ein Taktgeber auf einem modularen Steckplatz vorgesehen sein, der je nach Betriebsmodus und Betriebszustand einen jeweiligen I/p-Wandler aktiviert und deaktiviert. In der Zwischenzeit bleibt der nicht aktivierte I/p-Wandler in dem Steckplatz in einer passiven Warteposition. Vorzugsweise hat der wenigstens eine Steckplatz eine elektrische Schnittstelle und gegebenenfalls eine pneumatische mit dem pneumatischen Versorgungseingang des pneumatischen Antriebssystems verbundene Schnittstelle zum pneumatischen Ankoppeln eines pneumatischen Anschlusses der I/p-Wandler.

Erfindungsgemäß hat die Strom-Druckwandlung wenigstens zwei pneumatisch getrennte Pneumatikausgänge, die mit der einen Arbeitskammer verbunden sind. An den Pneumatikausgängen können jeweils ein pneumatisches Stellsignal der wenigstens zwei Stellsignale getrennt voneinander die Strom-Druckwandlung verlassen. Die wenigstens zwei Pneumatikausgänge können jeweils durch einen Einzelausgang eines I/p-Wandlers gebildet sein.

Bei einer bevorzugten Ausführung der Erfindung schließt ausgehend von der Strom-Druckwandlung ein Leitungsnetz mit wenigstens zwei Parallelleitungen an. Die wenigstens zwei Parallelleitungen führen jeweils ein Stellsignal hin zur pneumatischen Arbeitskammer. An den wenigstens zwei pneumatischen getrennten Pneumatikausgängen kann jeweils eine separate Parallelleitung angeschlossen sein, die insbesondere jede für sich in die Arbeitskammer insbesondere jeweils an einer eigenen Öffnung mündet, die in einem die Arbeitskammer begrenzenden Antriebsgehäuse ausgebildet ist. Alternativ können die Parallelleitungen in einer Hauptzuführleitung münden, die in die Arbeitskammer führt. An der zusammenführenden Weiche der Hauptzuführleitung gelangen die wenigstens zwei Stellsignale und können sich bei simultaner Beaufschlagung vereinen. In den jeweiligen Leitungen können die Stellsignale vollkommen unbeeinflusst von dem Strom-Druckwandler hin in die Arbeitskammer gelangen. Selbstverständlich können die jeweiligen, von der Strom-Druckwandlung ausgehenden Stellsignale längs der jeweiligen Leitung betriebsbedingt abgeändert werden, beispielsweise indem der Leitung pneumatische Bauelemente, wie ein Schnellentlüfter, ein pneumatischer Schalter, oder ein Luftleistungsverstärker (Booster) eingesetzt werden. Insbesondere kann es vorteilhaft sein, ein von der Strom-Druckwandlung erzeugtes Drucksignal bestimmten pneumatischen Drucks dahingehend abzuändern, dass der Stelldruck konstant bleibt, während der Luftdurchfluss, also die Volumenströmung, erhöht wird.

Des Weiteren betrifft die Erfindung ein Verfahren zum Betreiben eines pneumatischen Antriebssystems zur Betätigung eines Stellventils, insbesondere des Regelungsventils oder eines Sicherheitsventils, einer prozesstechnischen Anlage gemäß Anspruch 8. Das erfindungsgemäße Verfahren kann gemäß der Funktionsweise des erfindungsgemäßen pneumatischen Antriebssystems ausgelegt sein.

Bei dem Verfahren wird eine pneumatische Arbeitskammer mit Pneumatikdruck beaufschlagt, um das Stellventil in eine Sollstellung zu verfahren. Erfindungsgemäß werden anhand elektropneumatischer Umwandlung zwei oder mehrere, pneumatische Stellsignale der einen Arbeitskammer des pneumatischen Antriebssystems zugeführt. Bei einem doppelt wirkenden pneumatischen Antrieb können jeweils zwei pneumatische Stellsignale der einen und der anderen pneumatischen Arbeitskammer zugeführt werden. In diesem Fall sind vier Stelldrucksignale zu erzeugen.

Bei einer Weiterbildung der Erfindung wird jedes Stellsignal oder Stelldrucksignal durch eine individuelle Strom-Druckwandlungsprozedur erzeugt. Vorzugsweise werden die Stellsignale oder Stelldrucksignale sich überlagernd oder sich ausschließend, gleichzeitig oder nacheinander in der einen Arbeitskammer zugeführt.

Bei einer bevorzugten Ausführung der Erfindung werden die wenigstens zwei Stellsignale mit unterschiedlich großen Druckbeträgen versehen, wobei insbesondere bei Überschreitung einer Sollwertänderungsgrenze einer Stellungsregelungsprozedur und/oder bei Auslösen einer Sollwertänderung zuerst nur ein Hochdruckstellsignal an die eine Arbeitskammer ausgegeben wird. Dem Hochdruckstellsignal kann insbesondere zur Feinabstimmung des insbesondere in der Arbeitskammer zur regelnden Pneumatikdrucks das Niederdruckstellsignal überlagernd folgen. Vorzugsweise wird bei Unterschreitung der Sollwertänderungsgrenze nur ein Niederdruckstellsignal an eine Arbeitskammer abgegeben, um ein Überschwingen des Stellventils zu vermeiden.

Bei einer bevorzugten Weiterbildung der Erfindung werden die Luftdurchflüsse der wenigstens zwei Stelldrucksignale voreingestellt. Die voreingestellten Luftdurchflüsse werden bei Auslösen des jeweiligen Stellsignals abgegeben, ohne die Möglichkeit vorzusehen, diese bei Abgabe noch zu verändern.

Bei einer Weiterbildung der Erfindung werden von den wenigstens zwei Stellsignalen eines mit einem geringen Luftdurchfluss und ein anderes mit einem hohen Luftdurchfluss versehen, wobei insbesondere der hohe Luftdurchfluss wenigstens doppelt zu groß wie der geringe Luftdurchfluss ist. Beispielsweise werden für eine Schnellverlagerung des Stellventils zuerst das Stellsignal mit hohem Luftdurchfluss oder beide Stellsignale mit hohem und geringem Luftdurchfluss und anschließend erst lediglich das Stellsignal mit geringem Luftdurchfluss der Arbeitskammer zugeführt.

Bei einer bevorzugten Ausführung der Erfindung werden zum Regeln der Stellung des Stellventils die wenigstens zwei Stellsignale mit unterschiedlich großen Luftdurchflüssen versehen. Die wenigstens zwei pneumatischen Stellsignale können gleichzeitig der Arbeitskammerzugeführt werden. Im Falle, dass eine zulässige Schwingungsamplitudengrenze und/oder Schwingungsfrequenzgrenze an dem Stellventil überschritten wird, wird das Stellventil mit hohem Luftdurchfluss unter Aufrechterhaltung der Schaltstellung des Stellventils mit geringem Luftdurchfluss abgeschaltet, und gegebenenfalls nach Überschreitung der zulässigen Grenzen wird das Stellsignal mit hohem Luftdurchfluss wieder zugeschaltet.

Bei einer Weiterbildung der Erfindung werden zum Verlagern des Stellventils insbesondere eines Pumpgrenzregelventils, zwei Stellsignale insbesondere mit unterschiedlich großen Druckbeträgen gleichzeitig der einen Arbeitskammer während eines vorzugsweise vorab festgestellten Impulszeitraum insbesondere von weniger als einer Sekunde oder solange zugeführt, bis das Stellventil anspricht. Anschließend wird eines der Stellsignale, insbesondere das Hochdruckstellsignal, abschaltet, weil dann nur ein Niederdruckstellsignal wirken soll. Die Länge des Impulszeitraums kann beispielsweise aus Erfahrungsreferenzen bezüglich identischer oder ähnlicher Stellventile eingestellt werden.

Vorzugsweise werden zum Regeln der Stellung des Stellventils die wenigstens zwei Stellsignale mit unterschiedlich großen Druckbeträgen versehen, wobei die wenigstens zwei pneumatischen Stellsignale gleichzeitig der einen Arbeitskammer zugeführt werden. Im Falle, dass eine zulässige Schwingungsamplitudengrenze und/oder Frequenzgrenze an dem Stellventil überschritten wird, wird das Hochdruckstellsignal unter Aufrechterhaltung des Niederdruckstellsignals abgeschaltet und gegebenenfalls nach Unterschreitung der zulässigen Grenze das Hochdruckstellsignal wieder zugeschaltet.

Bei einer Weiterbildung der Erfindung werden die wenigstens zwei Stelldrucksignale mit unterschiedlich großen Druckbeträgen oder Luftdurchflüssen versehen, wobei zum Öffnen oder Schließen eines Sicherheitsventils insbesondere nur das Hochdruckstellsignal oder das Stellsignal mit hohem Luftdurchfluss eingeschaltet wird und/oder zum Durchführen eines Partial-Stroke-Tests nur das Niederdruckstellsignal oder Stellsignal mit geringem Luftdurchfluss eingeschaltet wird.

Bei einer Weiterbildung der Erfindung werden für eine schnelle Regelung des Drucks in einem Volumen, wie der Arbeitskammer oder einer Zuführleitung, bei einer großen Sollwertänderung wenigstens zwei pneumatische Signale gleichzeitig, zumindest über eine kurze Zeitspanne nach der Sollwertänderung, dem Volumen zugeführt. Die Signale können jeweils ein oder mehrere Hochdruck- und Niederdruckstellsignalen umfassen, die insbesondere unterschiedliche Volumenströme hervorrufen. Bei einer kleinen Sollwertänderung kann das Volumen nur mit einem Stelldrucksignal, insbesondere Niederdruckstellsignal, beaufschlagt werden. Wird das Volumen mit wenigstens zwei pneumatischen Stellsignalen beaufschlagt, kann das Hochdruckstellsignal zeitlich vor dem Niederdruckstellsignal abschaltet werden, insbesondere sobald in dem Volumen ein, vorzugsweise vorbestimmter Druckschwellwert nahe dem Sollwert erreicht wird. Eine Feinanpassung des Drucks in dem Volumen kann durch Regelung des Niederdrucksignals erfolgen.

Bei einer Weiterbildung der Erfindung wird eine schnelle Regelung einer Ventilposition eines Ventils, wie eines Pumpgrenzregelventils zum Schutz eines Kompressors, dadurch erreicht, dass zum Öffnen eines Ausgangsventils des Kompressors das Ausgangsventil mit zwei pneumatischen Signalen gleichzeitig angesteuert wird. Dabei kann ein Hochdruckstellsignal wenigstens bis zum Ansprechen der Ventilöffnungsbewegung zum pneumatischen Antrieb geführt werden, so dass der Ausgang des Kompressors möglichst schnell freigeschaltet und der Kompressor nicht überlastet wird. Das Hochdruckstellsignal kann nach dem Ansprechen abgeschaltet werden, um ein Überschwingen über die gewünschte Ventilposition zu vermeiden. Für eine Feinregelung der Ventilposition kann ausschließlich das Niederdruckstellsignal herangezogen werden. Vorzugsweise wird beim Schließen des Ventils lediglich das Niederdruckstellsignal dem pneumatischen Antrieb zugeführt, um einen gefährlichen Zustand des Kompressors sicher zu vermeiden.

Bei einer Weiterbildung der Erfindung werden zur genauen Regelung einer Ventilposition eines Ventils mit pneumatischem Antrieb zwei unterschiedliche Stelldrucksignale dem pneumatischen Antrieb zugeführt. Ein Hochdruckstelldrucksignal wird dabei nur für eine kurze Impulszeitdauer simultan mit einem zweiten Stelldrucksignal auf den pneumatischen Antrieb aufgebracht. Durch den kurzen Impuls mit großem Volumenstrom wird die Haftreibung des Ventils schnell überwunden. Vorzugsweise wird die Impulslänge bei einem Referenzöffnungsvorgang als die Zeitdauer zwischen dem Beaufschlagen des pneumatischen Antriebs und dem Losreißen des Ventils bestimmt. Das Hochdruckstellsignal kann, insbesondere zeitgesteuert, sicher rechtzeitig abgeschaltet werden, ohne dass eine Rückmeldung der Ventilposition erfolgen müsste, so dass ein Überschwingen vermieden und eine schnelle Regelung sichergestellt sind. Alternativ kann das Hochdruckstellsignal auch über die Impulszeitdauer hinaus zum Regeln der Ventilposition herangezogen werden, wird allerdings vor dem zweiten Stelldrucksignal abgeschaltet.

Bei einer Weiterbildung der Erfindung wird die Ventilposition eines Ventils mit pneumatischem Antrieb durch zwei Stelldrucksignalen, insbesondere ein Hochdruck- und eine Niederdruckstellsignal, geregelt. Falls eine Schwingtendenz, beispielsweise durch Druckstoßanregungen aus dem Prozessmedium, erfasst wird, kann ein Stelldrucksignal, vorzugsweise das Hochdruckstellsignal abgeschaltet oder lediglich ein Signal zur Regelung des Ventils dem pneumatischen Antrieb zugeführt werden. Sobald erfasst wird, dass die Schwingungen nicht mehr auftreten, können zur Ventilpositionsregelung wieder beide Stelldrucksignale eingesetzt werden.

Bei einer Weiterbildung der Erfindung werden zum schnellen Öffnen oder Schließen eines Sicherheitsventils ein Hochdruckstellsignal oder zwei Stelldrucksignale verwendet. Vorzugsweise wird die Beweglichkeit des Sicherheitsventils, in einer sicherheitsunkritischen Betriebssituation dadurch sichergestellt, dass ein Stelldrucksignal, insbesondere ein Niederdruckstellsignal auf den pneumatischen Antrieb zum Betätigung des Sicherheitsventils aufgebracht wird und dabei ein Teilhubtest (Partial Stroke-Test) insbesondere zwischen einer 100 % Öffnungsstellung und 80 % Öffnungsstellung des Sicherheitsventils durchgeführt wird.

Weitere Merkmale bevorzugter Ausgestaltungen der Erfindung sind in den Unteransprüchen angegeben.
- Figur 1: eine schematische Darstellung eines erfindungsgemäßen pneumatischen Antriebssystems;
- Figur 2: eine schematische Darstellung einer weiteren bevorzugten Ausführung des pneumatischen Antriebssystems gemäß der Erfindung;
- Figur 3: eine schematische Darstellung einer weiteren Ausführung eines erfindungsgemäßen pneumatischen Antriebssystems.

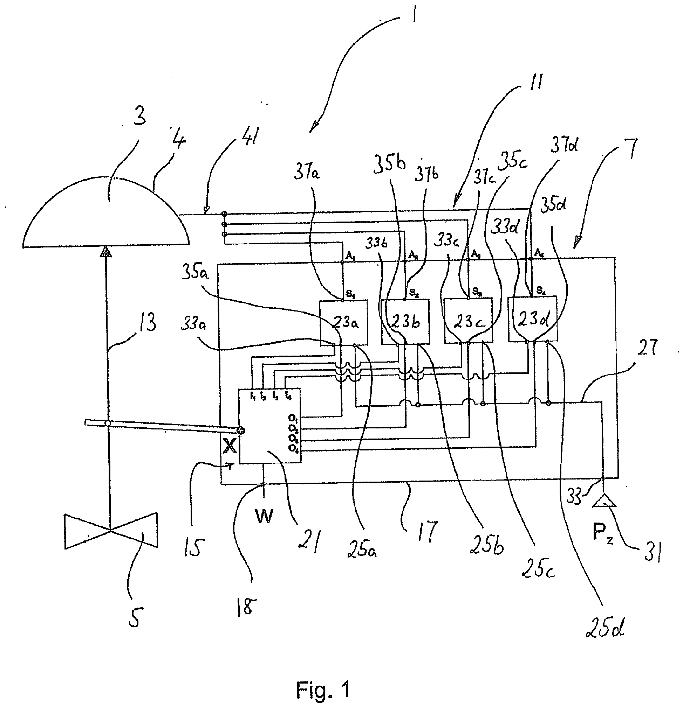

In Figur 1 ist ein pneumatisch betriebenes, erfindungsgemäßes Antriebssystem im Allgemeinen mit der Bezugsziffer 1 versehen. Mittels des Antriebssystems ist ein Stellventil 5 betätigt, welches zur Regelung einer Prozessfluidströmung einer nicht dargestellten prozesstechnischen Anlage, wie einer petrochemischen Anlage, einer Lebensmittel verarbeitenden Anlage, wie einer Bauerei, oder dergleichen eingesetzt wird. Das Stellventil kann auch ein Pumpgrenzventil eines Kompressors oder ein Sicherheitsschnellabschaltventil sein. Das pneumatische Antriebssystem 1 umfasst einen pneumatischen Stellantrieb 4 mit einer Arbeitskammer 3, der auf das Stellventil 5 zum Regeln der Prozessfluidströmung der nicht dargestellten prozesstechnischen Anlage einwirkt, und eine Strom-Druckwandlung 7, die als Stellungsregler ausgebildet ist und an die ein pneumatisches Leitungssystem 11 zur Verbindung mit der Arbeitskammer 3 des Stellantriebs 4 anschließt.

Das Stellventil 5 ist mit dem pneumatischen Stellantrieb 4 über eine Spindel oder Welle 13 verbunden. Ein Positionssensor 15, der teilweise innerhalb eines Gehäuses 17 der Strom-Druckwandlung 7 angeordnet ist, greift die Momentanstellung X des Stellventils 5 ab. Der Positionssensor 15 gibt ein Positionssignal an einen Mikroprozessor 21 ab, der darstellungsgemäß in einem Innenraum des Gehäuses 17 untergebracht ist und über einen Feldeingang 18 ein Soll-Stell-Signal w von einer nicht näher dargestellten Leitstelle der prozesstechnischen Anlage empfängt. Neben dem elektrischen Feldeingang 18 weist die Strom-Druckwandlung einen pneumatischen Feldeingang 33 auf, der an eine pneumatische Versorgungsquelle 31 angeschlossen ist, sowie vier Ausgänge A₁₋₄, welche die pneumatischen oder elektrischen Ausgangssignale S₁₋₄ der Steck- oder Einschubplätze 23a, 23b, 23c, 23d extern der Strom-Druckwandlung 7 bereitstellen.

Die Strom-Druckwandlung 7 oder der Stellungsregler hat vier, im Wesentlichen gleich aufgebaute, von außen frei zugängliche Steck- oder Einschubplätze 23a, 23b, 23c, 23d, welche optional mit vier einzelnen Elektronikkomponenten unterschiedlichster Bauart belegbar sind. Die Elektronikkomponente kann ein I/P-Wandler, ein Datenspeicher, ein pneumatisch betriebener Stromgenerator, der Mikroprozessor 21 und/oder ein Elektronikschalter sein, wobei auch Elektronikkomponenten gleicher Bauart unterschiedlicher Funktionsweise oder Leistungsparameter in den Steckplätzen eingesetzt werden können. Die Steckplätze 23a bis 23d sind derart modular angepasst, dass sie je nachdem, welche vorbestimmte elektronische Komponente eingesetzt wird, die Funktion der Elektronikkomponente durch Herstellung von Kommunikationsleitungen zu den jeweils anderen Bauelementen gewährleisten.

Die Steckplätze 23a bis 23d haben eine pneumatische Eingangsschnittstelle 25a bis 25d, die mit einer Versorgungsleitung 27 verbunden ist, sowie elektrische Eingangsschnittstellen 35a bis 35d, die mit dem Mikroprozessor 21 verbunden sind, und Ausgangsschnittstellen 33a bis 33d. Jeder Steckplatz 23a bis 23d hat außerdem eine Ausgangsschnittstelle 37a bis 37d, über die Ausgangssignale entweder elektrischer Natur (nicht in Figur 1 dargestellt) oder pneumatischer Natur S₁₋₄ an dem jeweiligen Ausgang A₁ bis A₄ abgegeben werden kann. Bei der in Figur 1 dargestellten Ausführung sind in den Steckplätzen 23a bis 23d vier I/p-Wandler vorgesehen, die über die Ausgänge A₁₋₄ pneumatische Stelldrucksignale S₁₋₄ abgegeben.

Die pneumatische Ausgänge A₁₋₄ münden in einer gemeinsamen Leitung 41 zur Ansteuerung der Arbeitskammer 3. Wenngleich nicht dargestellt, können ein oder zwei Ausgänge auch über separate Leitungen direkt mit einer oder mehreren Arbeitskammern eines Stellantriebs verbunden sein.

Je nachdem welche Luftleistung dem elektropneumatischen Feldgerät 7 zugeordnet sein soll, können die Steckplätze 23a bis 23d auch mit vier unterschiedlichsten I/P-Wandlern belegt sein. Wird ein Steckplatz 23a bis 23d mit einem I/P-Wandler belegt, so erkennt der Mikroprozessor 21 die Belegung über beispielsweise eine geeignete, nicht dargestellte Sensorik und/oder über die jeweilige die elektrische Eingangsschnittstelle 35a bis 35d mit dem elektrischen Mikroprozessorausgang O₁₋₄ verbindenden Leitung.

Durch vier separate in die Steckplätze 23a bis 23d eingesetzte I/p-Wandler lässt sich eine Stellantriebsbeschaltung mit vier entkoppelten Stelldrucksignalen erreichen, die bei gemeinsamer Ansteuerung und gleicher jeweiliger Luftleistung des I/p-Wandlers eine vierfach zugeführte Luftleitung realisieren. Somit lässt sich das Stellventil auch bei großen Lasten vergleichsweise schnell die gewünschte Position bringen, wobei zur Feinregelung nach Bedarf ein-, zwei- oder drei Stelldrucksignale abgeschaltet werden können, um eventuelles Überschwingen beim Anfahren der gewünschten Stellposition zu vermeiden.

Sollten mehrere Steckplätze 23a bis 23d mit unterschiedlichen I/P-Wandlern belegt sein, so kann der Mikroprozessor 21 einen dieser zum Betrieb des Stellantriebs 3 auswählen oder mehrere simultan ansteuern. Wählt der Mikroprozessor 21 beispielweise den in dem Steckplatz 23c angeordneten I/P-Wandler mit einer bestimmten Luftleistung aus, so gibt der Mikroprozessor 21 über seinen Ausgang I₃ ein entsprechendes elektrisches Regelsignal an den in dem Steckplatz 23c angeordneten I/P-Wandler ab, der ein entsprechendes Luftdrucksignal S₃ über die pneumatische Ausgangsschnittstelle 37c an den pneumatischen Stellantrieb 3 abgibt, wobei die restlichen I/P-Wandler in den Steckplätzen 23a, 23b, 23d durch den Mikroprozessor 21 deaktiviert oder zumindest unangesprochen bleiben.

Anstatt mehrerer I/P-Wandler können in dem Steckplatz 23a bis 23d auch andere Komponenten der Strom-Druckwandlung eingesetzt sein, wie der Mikroprozessor 21, ein Datenspeicher, ein Funkmodul oder eine elektrische Schaltung zur Kommunikation mit externen elektrischen Baukomponenten.

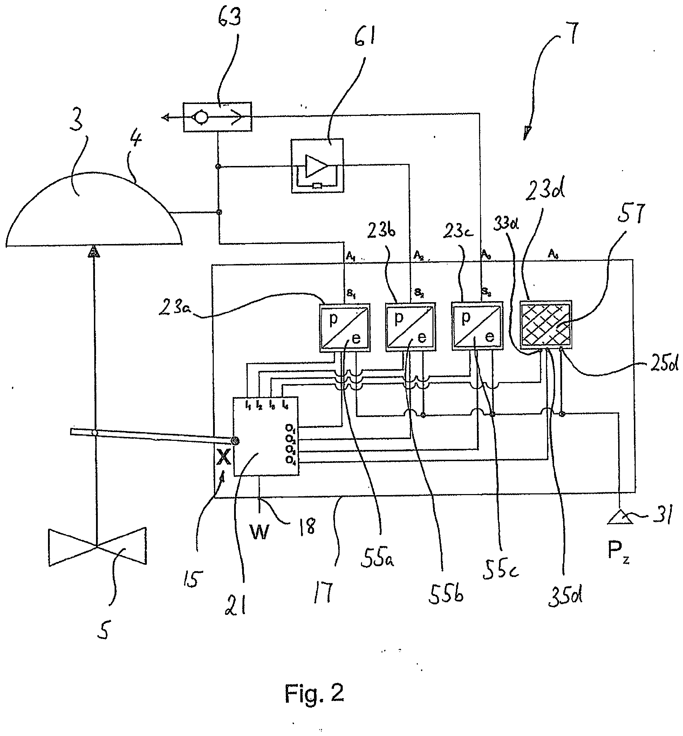

In Figur 2 sind drei der modularen Steckplätzen 23a bis 23d der Strom-Druckwandlung 7 mit einem I/P-Wandler 55a, 55b, 55c belegt sowie einer der modularen Steckplätze 23d mit einem funktionslosen Leermodul 57.

Die I/p-Wandler 55a, 55b, 55c erzeugen drei pneumatische Stelldrucksignale S₁₋₃. Das Stelldrucksignal S₁ wird direkt zur Zuführleitung des Stellantriebs 3 geführt. Das Stelldrucksignal S₂ wird über einen Volumenverstärker 61 verstärkt und als Signal mit größerem Volumenstrom mit der Zuführleitung des Stellantriebs 3 gekoppelt. Das dritte Stelldrucksignal S₃ dient im Wesentlichen der Schaltung eines Schnellentlüfters 63 für den Stellantrieb 3, der bei einem vorbestimmten Stelldrucksignalabfall am Ausgang A₃ zum Entlüften der pneumatischen Leitungen zum Stellantrieb 3 führt.

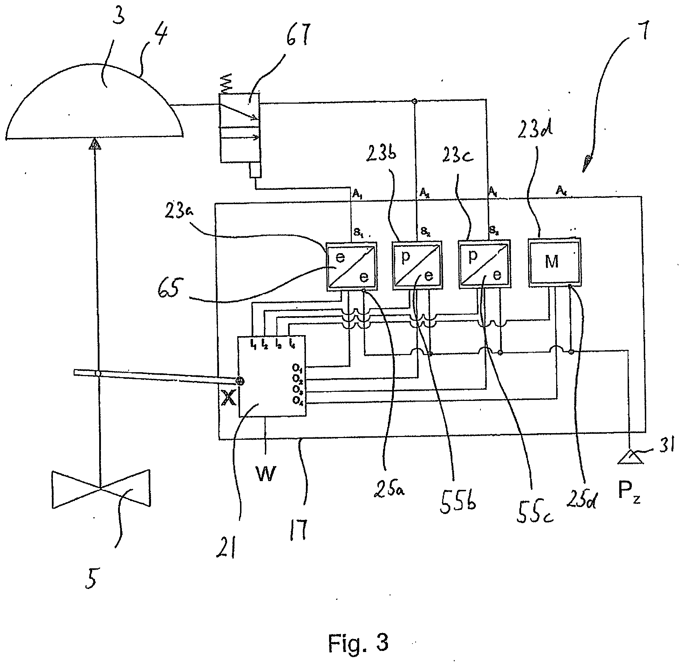

In Figur 3 ist die Stromdruckwandlung 7 derart ausgebildet, dass in dem Steckplatz 23a eine elektrische Ausgangsstufe 65 zur Ansteuerung eines Magnetventils 67 angeordnet ist. Des Weiteren sind in den Steckplätzen 23b und 23c zwei I/p-Wandler 55b, 55c eingesetzt. Die Ausgänge A₂₋₃ der I/p-Wandler 55b, 55c sind in einer gemeinsamen Zuleitung zum Stellantrieb 3 gekoppelt. Im vierten Steckplatz 23d ist beispielhaft ein Datenspeicher M vorgesehen. Das Magnetventil 67 kann so angesteuert werden, dass die Stelldrucksignale S₂₋₃ der I/p-Wandler zum Stellantrieb geleitet werden können oder zur Entlüftung des Stellantriebs. Das bei durchgeschaltetem Magnetventil 67 zum Stellantrieb geführte Stelldrucksignal kann je nach Ansteuerung der I/p-Wandler lediglich eines der Stelldrucksignale S₂ und S₃ umfassen oder eine Kombination beider Stelldrucksignale S₂ und S₃ sein. In der Regel ist eines der Stelldrucksignale als Hochdrucksignal und eines der Stelldrucksignale als Niederdruckstellsignal ausgeführt, um eine größere Variabilität bei der Ansteuerung des Stellantriebs zu erreichen.

Abhängig von den Leistungsparametern und der Anzahl der eingesetzten I/p-Wandlermodule können gleiche Stelldrucksignale, oder ein oder mehrere Hochdruck- und/oder Niederdruckstellsignale kombiniert oder als Paare von je einem Hochdruck- und Niederdruckstellsignal einer oder mehreren Arbeitskammern zugeführt werden.

Mit den Anordnungen gemäß den Figuren 1 bis 3 kann beispielsweise eine schnelle Druckregelung in der Antriebskammer des Stellantriebs 3 erfolgen. Dazu kann optional in einem der Steckplätze 23a bis 23d eine Druckerfassungskomponente vorgesehen sein. Bei großer Drucksollwertänderung lässt sich eine schnelle Druckanpassung beispielsweise dadurch erreichen, dass mehrere Stelldrucksignale dem Stellantrieb zugeführt werden, z.B. alle Stelldrucksignale S₁₋₄ gemäß Figur 1 oder das Signal S₂, großer Volumenstrom, mit dem Signal S₁ gemäß Figur 2 oder beide Stelldrucksignale S₂₋₃ gemäß Figur 3.

Um eine exakte Druckregelung zu ermöglichen, kann eines der Drucksignale, bei ungleichen Drucksignalen dasjenige größeren Volumenstroms, nur für eine kurze Zeitspanne zugeschaltet werden und die Feinregelung im Wesentlichen über das weitere Stelldrucksignal erfolgen. Bei kleinen Drucksollwertänderungen kann auch ausschließlich eine Niederdruckstellsignal oder ein Signal kleinen Volumenstroms eingesetzt werden. Bei mehr als zwei zusammen geschalteten Stelldrucksignalen, können andere Signalkombinationen vorteilhaft sein, z.B. schnelle Druckänderung mit drei Signalen und Feinregelung mit zwei Signalen oder einem Signal.

In gleicher Weise kann eine schnelle Regelung der Ventilposition des Stellventils 5 beispielsweise gemäß Figur 2 erreicht werden, wobei zur schnellen Überwindung des Ventilwegs ein großer Volumenstrom durch Kombination des verstärkten Stelldrucksignals S₂ mit dem Stelldrucksignal S₁ erreicht wird, und die Feinregelung unter Reduktion des Volumenstroms durch das unverstärkte Signal S₁ erfolgt.

Des Weiteren kann beispielsweise gemäß Figur 3 eine simultane Ansteuerung mit zwei Stelldrucksignalen S₂₋₃ helfen, bei einem Ventil die Haftreibung zu überwinden und damit die durch das Haften resultierende Verzugszeit zu vermindern, die üblicherweise die Regelung erschwert. Eines der Stelldrucksignale wird dabei nach Überwindung der Haftreibung durch Deaktivierung des I/p-Wandlers abgeschaltet. Der Zeitpunkt der Überwindung der Haftreibung kann durch einen Referenzversuch bestimmt und im Mikroprozessor abgelegt sein oder durch geeignete Messtechnik, die ebenfalls als Modul in einem Einsteckplatz vorgesehen sein kann, festgestellt werden. Die letztendliche Feinregelung der Ventilposition erfolgt auf Basis eines Stelldrucksignals, nämlich des Niederdruckstellsignals.

Die Regelzuverlässigkeit mit der Anordnung gemäß dem Ausführungsbeispiel der Figur 3 dadurch verbessert werden, dass bei einer schnellen Positionsregelung unter Verwendung beider Stelldrucksignale S₂₋₃ im Fall einer Schwinganregung durch das Prozessmedium eines der Stelldrucksignale abgeschaltet wird und die Regelung ausschließlich auf Basis nur eines Signals, in der Regel des Niederdruckstellsignals, erfolgt, bis die Schwingneigung abgenommen hat.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Pneumatisches Antriebssystem
- 3: Arbeitskammer
- 4: pneumatischer Stellantrieb
- 5: Stellventil
- 7: Strom-Druckwandlung
- 11: pneumatische Leitungssystem
- 13: Spindel
- 15: Positionssensor
- 17: Gehäuse
- 18,33: Feldeingang
- 21: Mikroprozessor
- 23a,b,c,d: Steck- und Einschubplätze
- 25a,b,c,d: pneumatische Eingangsschnittstelle
- 33a,b,c,d: elektrische Ausgangschnittstelle
- 35a,b,c,d: elektrische Eingangschnittstelle
- 37a,b,c,d: Ausgangsschnittstelle
- 55a,b,c: I/p-Wandler
- 27: Versorgungsleitung
- 31: Versorgungsquelle
- 41: Leitungen
- 43: Andockmechanismus
- 45: Elektronikkomponente
- 47: elektrischer Eingang
- 49: elektrischer Ausgang
- 61: Volumenstromverstärker
- 63: Schnellentlüfter
- 65: Ausgangsstufe
- 65: Magnetventil
- A₁₋₄: Ausgänge
- I₁₋₄: Mikroprozessoreingang
- M: Datenspeicher
- O₁₋₄: Mikroprozessorausgang
- P_{Z}: Versorgungsdruck
- S₁₋₄: Ausgangssignal
- W: Soll-Stell-Signal
- X: Momentanstellung

## Patentansprüche

1. Pneumatisches Antriebssystem (1) zum Betätigen eines Stellventils (5), insbesondere eines Regelungsstellventils oder eines Sicherheitsventils, einer prozesstechnischen Anlage, umfassend eine pneumatische Arbeitskammer (3) und eine mit der Arbeitskammer (3) gekoppelte Strom-Druckwandlung (7) zum Beaufschlagen der Arbeitskammer (3) mit einem Pneumatikdruck, durch den das Stellventil (5) verfahren werden kann,
wobei die Strom-Druckwandlung (7) wenigstens einen elektrischen Eingang (w) zum Empfangen eines elektrischen Stellsignals aufweistwobei die Strom-Druckwandlung (7) wenigstens zwei pneumatische Stellsignale (S₁, S₂, S₃, S₄) erzeugt, mit denen die eine Arbeitskammer (3) beaufschlagt ist, **dadurch gekennzeichnet, dass** die Strom-Druckwandlung wenigstens zwei pneumatisch getrennte Pneumatikausgänge (A₁, A₂, A₃, A₄) aufweist, die mit der einen Arbeitskammer (3) verbunden sind und an denen die wenigstens zwei Stellsignale getrennt voneinander die Strom-Druckwandlung verlassen.

2. Antriebssystem nach Anspruch 1, **dadurch gekennzeichnet, dass** die Strom-Druckwandlung (7) die wenigstens zwei Stellsignale (S₁, S₂, S₃, S₄) unabhängig von einander erzeugt und/oder die wenigstens zwei Stellsignale (S₁, S₂, S₃, S₄) unabhängig voneinander der einen Arbeitskammer (3) zuführt und/oder die wenigstens zwei Stelldrucksignale gemäß einer vorgegebenen oder geregelten Taktung insbesondere gleichzeitig, nacheinander aufsummierend oder nacheinander abwechselnd der Arbeitskammer (3) zuführt.

3. Antriebssystem nach Anspruch 1 oder 2, **dadurch gekennzeichnet, dass** Luftdurchflüsse der wenigstens zwei Stellsignale (S₁, S₂, S₃, S₄) voreingestellt sind und/oder von den wenigstens zwei Stellsignalen eines einen geringen Luftdurchfluss und ein anderes einen großen Luftdurchfluss aufweist, wobei insbesondere der große Luftdurchfluss wenigstens doppelt so groß wie der geringe Luftdurchfluss ist, wobei insbesondere die Strom-Druckwandlung (7) derart gesteuert ist, dass für eine Schnellverlagerung des Stellventils (5) zuerst das Stellsignal mit großem Luftdurchfluss oder beide Stellsignale und anschließend lediglich das Stellsignal mit geringem Luftdurchfluss der Arbeitskammer (3) zugeführt ist.

4. Antriebssystem nach einem der vorstehenden Ansprüche, **dadurch gekennzeichnet, dass** die Strom-Druckwandlung (7) eine Regelungselektronik, wie einen Mikrorechner (21), aufweist, die anhand eines empfangenen Sollstellwerts (w) und/oder Iststellwerts (X) die Erzeugung und/oder Zuführung der wenigstens zwei Stellsignale (S₁, S₂, S₃, S₄) regelt, wobei insbesondere die Regelungselektronik mit wenigstens zwei I/p-Wandlern der Strom-Druckwandlung (7) regelungsgemäß gekoppelt ist, die unabhängig voneinander arbeitend das jeweilige Stellsignal (S₁, S₂, S₃, S₄) erzeugen insbesondere nach Empfang eines für den jeweiligen I/p-Wandler spezifizierten elektrischen Stellsignals der Regelungselektronik, wobei insbesondere die wenigstens zwei I/p-Wandler an eine Druckluftquelle vorzugsweise konstanten Versorgungsdrucks angeschlossen sind.

5. Antriebssystem nach Anspruch 4, **dadurch gekennzeichnet, dass** die Regelungselektronik einen Taktgeber aufweist, der die Beaufschlagung der Arbeitskammer (3) mit wenigstens zwei Stellsignalen (S₁, S₂, S₃, S₄) derart zeitlich taktet, dass die Stellsignale (S₁, S₂, S₃, S₄) gleichzeitig oder sukzessive sich überlagernd oder sich ausschließend in einem regelungsgemäßen Zeitabstand der Arbeitskammer (3) zugeführt werden.

6. Antriebssystem nach einem der vorstehenden Ansprüche, , **dadurch gekennzeichnet, dass** die wenigstens zwei Pneumatikausgänge (A₁, A₂, A₃, A₄) durch den Einzelausgang (37a, 37b, 37c, 37d) eines I/p-Wandlers gebildet sind.

7. Antriebssystem nach einem der vorstehenden Ansprüche, **dadurch gekennzeichnet, dass** von der Strom-Druckwandlung (7) ein Leitungsnetz (11) mit Parallelleitungen anschließt, die jeweils ein Stellsignal (S₁, S₂, S₃, S₄) führen, wobei insbesondere an den wenigstens zwei pneumatisch getrennten Pneumatikausgängen jeweils eine separate Parallelleitung angeschlossen ist, die insbesondere jede für sich in die Arbeitskammer (3) insbesondere jeweils an einer eigenen Öffnung mündet, die in einem die Arbeitskammer begrenzenden Antriebsgehäuse ausgebildet ist, oder die Parallelleitungen in eine Hauptzuführleitung mündet, die in die Arbeitskammer (3) führt.

8. Verfahren zum Betreiben eines pneumatischen Antriebssystems (1) zur Betätigung eines Stellventils (5), insbesondere eines Regelungsstellventils oder eines Sicherheitsventils, einer prozesstechnischen Anlage, wobei eine pneumatische Arbeitskammer (3) mit Pneumatikdruck beaufschlagt wird, um das Stellventil (5) in eine Sollstellung zu verfahren, wobei anhand elektropneumatischer Umwandlung zwei oder mehrere, pneumatische Stellsignale (S₁, S₂, S₃, S₄) der einen Arbeitskammer (3) zugeführt werden, **dadurch gekennzeichnet, dass** die wenigstens zwei Stellsignale die Strom-Druckwandlung getrennt voneinander an wenigstens zwei pneumatisch getrennten Pneumatikausgängen (A1, A2, A3, A4) der Strom-Druckwandlung verlassen, die mit der einen Arbeitskammer (3) verbunden sind.

9. Verfahren nach Anspruch 8, **dadurch gekennzeichnet, dass** jedes Stellsignal (S₁, S₂, S₃, S₄) durch eine individuelle Strom-Druckwandlungsprozedur erzeugt wird und/oder die wenigstens zwei Stellsignale sich überlagernd oder sich ausschließend, gleichzeitig oder nacheinander der einen Arbeitskammer (3) zugeführt werden.

10. Verfahren nach Anspruch 8 oder 9, **dadurch gekennzeichnet, dass** Luftdurchflüsse der wenigstens zwei Stellsignale (S₁, S₂, S₃, S₄) voreingestellt werden und/oder von den wenigstens zwei Stellsignalen eines mit einem geringen Luftdurchfluss und ein anderes mit hohem Luftdurchfluss versehen werden, wobei insbesondere der hohe Lustdurchfluss wenigstens doppelt so groß wie der geringe Luftdurchfluss ist, wobei insbesondere für eine Schnellverlagerung des Stellventils (5) zuerst das Stellsignal mit hohem Luftdurchfluss oder beide Stellsignale und anschließend lediglich das Stellsignal mit geringem Luftdurchfluss der Arbeitskammer (3) zugeführt werden.

11. Verfahren nach einem der Ansprüche 8 bis 10, **dadurch gekennzeichnet, dass** zum Regeln der Stellung des Stellventils (5) die wenigstens zwei Stellsignale (S₁, S₂, S₃, S₄) mit unterschiedlich großen Luftdurchflüssen versehen werden, wobei die wenigstens zwei pneumatischen Stellsignale gleichzeitig der Arbeitskammer (3) zugeführt werden und im Falle, dass eine zulässige Schwingungsamplitudengrenze und/oder -Frequenzgrenze an dem Stellventil überschritten wird, das Stellsignal mit hohem Luftdurchfluss unter Aufrechterhaltung des Stellsignals mit geringem Luftdurchfluss abgeschaltet wird und gegebenenfalls nach Unterschreitung der zulässigen Grenze das Stellsignal mit hohem Luftdurchfluss wieder zugeschaltet wird.

12. Verfahren nach einem der Ansprüche 8 bis 11, **dadurch gekennzeichnet, dass** die wenigstens zwei Stellsignale (S₁, S₂, S₃, S₄) mit unterschiedlich großen Druckbeträgen oder Luftdurchflüssen versehen werden, wobei zum Öffnen oder Schließen eines Sicherheitsventils insbesondere nur das Hochdruckstellsignal oder Stellsignal mit hohem Luftdurchfluss eingeschaltet wird und/oder zum Durchführen eines Partial-Stroke-Tests nur das Niederdruckstellsignal oder das Stellsignal mit geringem Luftdurchfluss eingeschaltet wird.

13. Verfahren nach einem der Ansprüche 8 bis 12, **dadurch gekennzeichnet, dass** zum Verlagern des Stellventils (5), insbesondere eines Pumpgrenzregelventils, zwei Stellsignale insbesondere mit unterschiedlich großen Druckbeträgen gleichzeitig der einen Arbeitskammer (3) während eines vorzugsweise vorab festgelegten Impulszeitraums, insbesondere von weniger als 1 Sekunde, oder solange zugeführt wird, bis das Stellventil anspricht, und anschließend eines der Stellsignale, insbesondere das Hochdruckstellsignal, abgeschaltet wird und insbesondere nur noch ein Niederdruckstellsignal wirkt, wobei insbesondere die Länge des Impulszeitraums beispielsweise aus Erfahrungsreferenzen eingestellt wird.

## Claims

1. A pneumatic drive system (1) for actuating a control valve (5), particularly a regulating control valve or a safety valve, of a processing plant, comprising a pneumatic working chamber (3) and a current/pressure transducer (7) coupled with the working chamber (3) for loading the working chamber (3) with a pneumatic pressure, by means of which the control valve (5) can be moved, wherein the current/pressure transducer (7) has at least one electrical input (w) for receiving an electrical control signal,
wherein the current/pressure transducer (7) generates at least two pneumatic control signals (S₁, S₂, S₃, S₄), with which the one working chamber (3) is loaded, **characterized in that** the current/pressure transducer (7) has at least two seperated pneumatic outputs (A1, A2, A3, A4) which are connected with a working chamber (3) and on which at least two control signals are leaving said current/pressure transducer independently of one another.

2. The drive system according to Claim 1, **characterised in that** the current/pressure transducer (7) generates the at least two control signals (S₁, S₂, S₃, S₄) independently of one another and/or supplies the at least two control signals (S₁, S₂, S₃, S₄) to the one working chamber (3) independently of one another and/or supplies the at least two control pressure signals to the working chamber (3) in accordance with a predetermined or regulated clocking, particularly simultaneously, successively in an added manner or successively in an alternating manner.

3. The drive system according to Claim 1 or 2, **characterised in that** air flows of the at least two control signals (S₁, S₂, S₃, S₄) are pre-set and/or of the at least two control signals, one has a low air flow and another has a large air flow, wherein in particular, the large air flow rate is at least twice as large as the low air flow, wherein in particular, the current/pressure transducer (7) is controlled in such a manner that for a rapid displacement of the control valve (5), initially the control signal with large air flow or both control signals and subsequently only the control signal with low air flow rate is supplied to the working chamber (3).

4. The drive system according to one of the preceding claims, **characterised in that** the current/pressure transducer (7) has a regulating electronics, such as a microcomputer (21), which regulates the generation and/or supply of the at least two control signals (S₁, S₂, S₃, S₄) on the basis of a received set-point control value (w) and/or the actual control value (X), wherein in particular, the regulating electronics is coupled in accordance with regulation with at least two I/P transducers of the current/pressure transducer (7), which operating independently of one another generate the respective control signal (S₁, S₂, S₃, S₄) in particular after receiving an electrical control signal of the regulating electronics specified for the respective I/P transducer, wherein in particular, the at least two I/P transducers are connected to a compressed air source, preferably of constant supply pressure.

5. The drive system according to Claim 4, **characterised in that** the regulating electronics have a clock generator, which temporally clocks the loading of the working chamber (3) with at least two control signals (S₁, S₂, S₃, S₄) in such a manner that the control signals (S₁, S₂, S₃, S₄) are supplied to the working chamber (3) simultaneously or successively overlapping one another or mutually exclusively in a regular time period.

6. The drive system according to one of the preceding claims, **characterised in that** the at least two pneumatically separated pneumatic outputs (A₁, A₂, A₃, A₄) are formed by the individual output (37a, 37b, 37c, 37d) of an I/P transducer.

7. The drive system according to one of the preceding claims, **characterised in that** a line network (11) with parallel lines connects from the current/pressure transducer (7), which parallel lines conduct a control signal (S₁, S₂, S₃, S₄) in each case, wherein in particular, at the at least two pneumatically separated pneumatic outputs, one separate parallel line in each case is connected, which in particular open separately into the working chamber (3) particularly in each case at a separate opening which is formed in a drive housing adjoining the working chamber, or the parallel lines open into a main supply line, which leads into the working chamber (3).

8. A method for operating a pneumatic drive system (1) for actuating a control valve (5), particularly a regulating control valve or a safety valve of a processing plant, wherein a pneumatic working chamber (3) is loaded with pneumatic pressure in order to move the control valve (5) into a desired position, wherein two or a plurality of pneumatic control signals (S₁, S₂, S₃, S₄) are supplied to the one working chamber (3) on the basis of electropneumatic conversion, **characterized in that** the at least two control signals leaving the current/pressure transducer at least two pneumatically separated pneumatic outputs (A1, A2, A3, A4) of the current/pressure transducer, which are connected to the one working chamber (3).

9. The method according to Claim 8, **characterised in that** each control signal (S₁, S₂, S₃, S₄) is generated by an individual current/pressure conversion procedure and/or the at least two control signals are supplied in an overlapping manner or mutually exclusively, simultaneously or successively to the one working chamber (3).

10. The method according to Claim 8 or 9, **characterised in that** air flow rates of the at least two control signals (S₁, S₂, S₃, S₄) are pre-set and/or of the at least two control signals, one is provided with a low air flow rate and another is provided with a high air flow rate, wherein in particular, the high air flow rate is at least twice as large as the low air flow rate, wherein in particular, for a rapid displacement of the control valve (5), initially the control signal with high air flow rate or both control signals and subsequently only the control signal with low air flow rate are supplied to the working chamber (3).

11. The method according to one of Claims 8 to 10, **characterised in that** for regulating the position of the control valve (5), the at least two control signals (S₁, S₂, S₃, S₄) are provided with differently sized air flows, wherein the at least two pneumatic control signals are supplied to the working chamber (3) simultaneously and in the event that a permitted vibration amplitude limit and/or frequency limit is exceeded at the control valve, the control signal with high air flow rate is switched off whilst maintaining the control signal with low air flow rate and, if appropriate, the control signal with high air flow rate is reactivated after falling below the permitted limit.

12. The method according to one of Claims 8 to 11, **characterised in that** the at least two control signals (S₁, S₂, S₃, S₄) are provided with differently sized pressure values or air flows, wherein only the high pressure control signal or the control signal with high air flow in particular is switched on for opening or closing a safety valve and/or only the low pressure control signal or the control signal with low air flow rate is switched on for carrying out a partial stroke test.

13. The method according to one of Claims 8 to 12, **characterised in that** to displace the control valve (5), of a surge regulating valve in particular, two control signals, particularly with differently sized pressure values, are simultaneously supplied to the one working chamber (3) during a preferably predetermined pulse period of particularly less than 1 second or for as long as it takes for the control valve to respond, and subsequently, one of the control signals, particularly the high pressure control signal, is switched off and in particular then only a low pressure control signal acts, wherein the length of the pulse period in particular is set for example from empirical references.

## Revendications

1. Système d'entraînement pneumatique (1) pour l'actionnement d'une soupape de réglage (5), en particulier d'une soupape de réglage de régulation ou d'une soupape de sécurité, d'une installation industrielle, comportant une chambre de travail pneumatique (3) et une conversion courant-pression (7) accouplé à la chambre de travail (3) pour appliquer une pression pneumatique à la chambre de travail (3), laquelle permet de déplacer la soupape de réglage (5),
dans lequel la conversion courant-pression (7) comporte au moins une entrée électrique (w) pour la réception d'un signal de réglage électrique, dans lequel la conversion courant-pression (7) produit au moins deux signaux de réglage pneumatiques (S1, S2, S3, S4) appliqués à la chambre de travail (3), **caractérisé en ce que** la conversion courant-pression comporte au moins deux sorties pneumatiques (A1, A2, A3, A4) séparées pneumatiquement, lesquelles sont reliées à la chambre de travail (3) et au niveau desquelles les au moins deux signaux de réglage quittent la conversion courant-pression séparément les uns des autres.

2. Système d'entraînement selon la revendication 1, **caractérisé en ce que** la conversion courant-pression (7) produit les au moins deux signaux de réglage (S1, S2, S3, S4) indépendamment les uns des autres et/ou fournit les au moins deux signaux de réglage (S1, S2, S3, S4) indépendamment les uns des autres à la chambre de travail (3) et/ou fournit les au moins deux signaux de pression de réglage à la chambre de travail (3) selon une synchronisation prédéfinie ou réglée, en particulier simultanément, consécutivement de façon cumulée ou consécutivement de façon alternée.

3. Système d'entraînement selon la revendication 1 ou 2, **caractérisé en ce que** des débits d'air des au moins deux signaux de réglage (S1, S2, S3, S4) sont préréglés et/ou l'un parmi les au moins deux signaux de réglage présente un débit d'air faible et l'autre un débit d'air élevé, le débit d'air élevé étant notamment deux fois plus grand que le débit d'air faible, dans lequel la conversion courant-pression (7) est en particulier commandée de telle façon que pour un déplacement rapide de la soupape de réglage (5), le signal de réglage avec le débit d'air élevé ou les deux signaux de réglage est/sont délivré(s) en premier à la chambre de travail (3), après quoi le signal de réglage avec le débit d'air faible est délivré seul.

4. Système d'entraînement selon l'une des revendications précédentes, **caractérisé en ce que** la conversion courant-pression (7) comporte une électronique de régulation, telle qu'un microordinateur (21), chargée de réguler la production et/ou la délivrance des au moins deux signaux de réglage (S1, S2, S3, S4) à l'aide d'une valeur théorique reçue (w) et/ou d'une valeur de réglage réelle (X), dans lequel l'électronique de régulation est en particulier couplée à au moins deux convertisseurs I/P de la conversion courant-pression (7), lesquels produisent le signal de réglage (S1, S2, S3, S4) respectif en travaillant indépendamment l'un de l'autre, en particulier après réception d'un signal de réglage électrique de l'électronique de régulation, spécifique au convertisseur I/P respectif, les au moins deux convertisseurs I/P étant en particulier reliés à une source d'air comprimé avec une pression d'alimentation de préférence constante.

5. Système d'entraînement selon la revendication 4, **caractérisé en ce que** l'électronique de régulation comporte un générateur de synchronisation synchronisant l'application d'au moins deux signaux de réglage (S1, S2, S3, S4) à la chambre de travail (3) de telle façon que les signaux de réglage (S1, S2, S3, S4) sont délivrés à la chambre de travail (3) simultanément ou successivement en se superposant ou en s'excluant, en respectant un intervalle de temps conforme à la régulation.

6. Système d'entraînement selon l'une des revendications précédentes, **caractérisé en ce que** les au moins deux sorties pneumatiques (A1, A2, A3, A4) sont formées par la sortie unique (37a, 37b, 37c, 37d) d'un convertisseur I/P.

7. Système d'entraînement selon l'une des revendications précédentes, **caractérisé en ce qu'**un réseau de lignes (11) avec des lignes parallèles guidant respectivement un signal de réglage (S1, S2, S3, S4) est relié à la conversion courant-pression (7), dans lequel une ligne parallèle séparée est en particulier reliée respectivement aux au moins deux sorties pneumatiques séparées pneumatiquement, celle-ci débouchant en particulier séparément dans la chambre de travail (3), en particulier respectivement au niveau d'une ouverture distincte formée dans un boîtier d'entraînement délimitant la chambre de travail, ou dans lequel les lignes parallèles débouchent sur une ligne d'alimentation principale menant dans la chambre de travail (3).

8. Procédé pour le fonctionnement d'un système d'entraînement pneumatique (1) pour l'actionnement d'une soupape de réglage (5), en particulier d'une soupape de réglage de régulation ou d'une soupape de sécurité, d'une installation industrielle, dans lequel une chambre de travail pneumatique (3) est soumise à une pression pneumatique pour déplacer la soupape de réglage (5) vers une position de consigne, dans lequel une conversion électropneumatique permet de délivrer deux ou plusieurs signaux de réglage pneumatiques (S1, S2, S3, S4) à la chambre de travail (3), **caractérisé en ce que** les au moins deux signaux de réglage quittent la conversion courant-pression séparément les uns des autres au niveau d'au moins deux sorties pneumatiques (A1, A2, A3, A4) séparées pneumatiquement de la conversion courant-pression, lesquelles sont reliées à la chambre de travail (3).

9. Procédé selon la revendication 8, **caractérisé en ce que** chaque signal de réglage (S1, S2, S3, S4) est produit par une opération de conversion courant-pression individuelle et/ou **en ce que** les au moins deux signaux de réglage sont fournis à la chambre de travail (3) en se superposant ou en s'excluant, simultanément ou consécutivement.

10. Procédé selon la revendication 8 ou 9, **caractérisé en ce que** des débits d'air des au moins deux signaux de réglage (S1, S2, S3, S4) sont préréglés et/ou l'un parmi les au moins deux signaux de réglage est pourvu d'un débit d'air faible et un autre d'un débit d'air élevé, le débit d'air élevé étant notamment deux fois plus grand que le débit d'air faible, dans lequel, en particulier pour un déplacement rapide de la soupape de réglage (5), le signal de réglage avec le débit d'air élevé ou les deux signaux de réglage est/sont délivré(s) en premier à la chambre de travail (3), après quoi le signal de réglage avec le débit d'air faible est délivré seul.

11. Procédé selon l'une des revendications 8 à 10, **caractérisé en ce que** pour régler la position de la soupape de réglage (5), les au moins deux signaux de réglage (S1, S2, S3, S4) sont pourvus de débits d'air de différentes grandeurs, dans lequel les au moins deux signaux de réglage pneumatiques sont délivrés simultanément à la chambre de travail (3) et, si une limite d'amplitude d'oscillation et/ou une limite de fréquence d'oscillation autorisée est dépassée, le signal de réglage avec le débit d'air élevé sera éteint tout en maintenant le signal de réglage avec le débit d'air faible et, le cas échéant, le signal de réglage avec le débit d'air élevé sera réactivé si la limite autorisée n'est pas atteinte.

12. Procédé selon l'une des revendications 8 à 11, **caractérisé en ce que** les au moins deux signaux de réglage (S1, S2, S3, S4) sont pourvus de quantités de pression ou de débits d'air de différentes grandeurs, dans lequel seul le signal de réglage haute pression ou le signal de réglage avec le débit d'air élevé est activé en particulier pour l'ouverture et la fermeture d'une soupape de sécurité et/ou seul le signal de réglage basse pression ou le signal de réglage avec le débit d'air faible est activé pour l'exécution d'un test de course partielle.

13. Procédé selon l'une des revendications 8 à 12, **caractérisé en ce que** pour le déplacement de la soupape de réglage (5), en particulier d'une soupape de régulation de limite de pompe, deux signaux de réglage, en particulier avec des niveaux de pression différents, sont délivrés simultanément à la chambre de travail (3) pendant une durée d'impulsion de préférence fixée préalablement, en particulier de moins d'une seconde, ou jusqu'à ce que la soupape de réglage réponde, puis l'un des signaux de réglage, en particulier le signal de réglage haute pression, est éteint et seul un signal de réglage basse pression continue d'agir, la longueur de la durée d'impulsion étant en particulier réglée à partir de références expérimentales.
